# EUROPEAN PATENT SPECIFICATION

(11) **EP 3 476 643 B1**
(45) Date of publication and mention of the grant of the patent: **23.09.2020**
(21) Application number: 18175815.2
(22) Date of filing: 04.06.2018
(51) Int. Cl.: B60K 17/28, B60K 25/02, A01D 34/64

(54) **WORK MACHINE**
ARBEITSMASCHINE
MACHINE DE TRAVAIL

(30) Priority: 30.10.2017 JP 2017209334
(43) Date of publication of application: 01.05.2019
(73) Proprietor: Kubota Corporation, Osaka-shi, Osaka 556-8601 (JP)
(72) Inventor: SHIBATA, Takashi, Sakai-shi, Osaka 5900823 (JP); TAKAOKA, Masaki, Sakai-shi, Osaka 5900823 (JP); KAGO, Tatsuki, Sakai-shi, Osaka 5900823 (JP)
(74) Representative: Cabinet Beau de Loménie

(56) References cited:
- EP-A1- 1 529 957
- CA-A- 1 241 213
- DE-A1-102010 045 015
- DE-U1- 9 407 521

## Description

### BACKGROUND OF THE INVENTION

### 1. Field of the Invention

The present invention relates to a work machine having an engine section at a front portion of a machine body frame, and a PTO shaft for taking off power for external output from a front end side of the engine section and guiding the power to a rear side of the machine body.

### 2. Description of Related Art

One example of such conventional work machine is disclosed in JP 2010-284112A.

This work machine is configured such that an engine section is provided at a front portion of a machine body frame, a power transmission belt is entrained around an output pulley on the front side of an engine included in the engine section and an input pulley of a PTO shaft provided at a lower position, and engine power is transmitted via the power transmission belt to the PTO shaft.

With this work machine, power to the PTO shaft can be taken from a more front side than the engine section at the machine body front portion. So, this is advantageous in that it is readily possible to obtain a power transmission arrangement to the PTO shaft which is a simple transmission arrangement and which allows easy maintenance operation also.

With this configuration, however, at a transmitting portion in the PTO shaft from the input pulley to this PTO shaft, there is provided a hydraulic operation type work (implement) clutch for connecting/disconnecting power transmission to to the PTO shaft. This poses a problem as follows. Namely, in case a power transmission arrangement to the PTO shaft is provided at a front portion of the machine body, the hydraulic operation type work clutch is disposed distantly from a source of pressure oil at a rear side of the machine body, thus tending to invite power loss due to increased pressure loss. Further, when power transmission to the PTO shaft is not needed, even if the work clutch is disengaged, the transmission belt per se entrained around the output pulley and the input pulley of the PTO shaft continues to rotate. So, deterioration in durability due to wear of the belt is inevitable. In this respect too, there remains room for improvement.

Moreover, in the case also of an arrangement having a manual operation type clutch body using a tension pulley, rather than the above-described hydraulic operation type work clutch, relative rotation occurs between the transmission belt from the output pulley on the engine side to the input pulley of the PTO shaft and the output pulley which effects driving rotation or the driven side input pulley. Thus, similarly, deterioration in durability due to wear of the belt is inevitable. Documents CA 1241213, DE 9407521 and DE 102010045015 disclose other examples of known work machines.

In view of the above, there is a need for a work machine that can avoid occurrence of power loss due to layout of a work clutch and that also can improve durability through reduction of wear of the transmission belt used in a power transmission mechanism.

### SUMMARY OF THE INVENTION

Then, a work machine having a configuration as follows is proposed.

A work machine comprising:
a machine body frame;
an engine section provided at a front portion of the machine body frame;
an engine provided on a front end side of the engine section and having an output shaft portion oriented to a machine body front side;
a transmission belt entrained around the output shaft portion and an input portion of a PTO shaft; and
an electromagnetic clutch provided in the output shaft portion;
wherein the output shaft portion includes an output pulley and the electromagnetic clutch connects/disconnects power transmission to the output pulley entrained by the transmission belt.

With the above arrangement, an electromagnetic clutch is employed as a work clutch for a power transmission mechanism disposed at a front portion of the machine body. Thus, while workability of maintenance is improved due to the disposing at the machine body front portion irrespectively of the position where the pressure oil source is present, work can be carried out in an efficient manner with reduced possibility of power loss due to pressure loss which would occur in the case of using a hydraulic operation type clutch as the work clutch.

And, since the presence position of this work clutch is in the output shaft portion of the engine, in case no power transmission to the PTO shaft is needed, rotation of the output pulley too can be stopped by disengaging the work clutch. Thus, with elimination of relative rotation of the transmission belt relative to the output pulley or to the input portion of the PTO shaft, occurrence of frictional wear of the transmission belt can be avoided, thus allowing improvement in the durability.

The electromagnetic clutch provided in a shaft end portion of the output shaft portion which portion is disposed on more machine body front side than the transmission belt; and an electric conduction harness for the electromagnetic clutch is disposed to extend from an electric power supply section on more machine body rear side than the transmission belt and to bypass an outer side of entraining range of the transmission belt to be connected to the electromagnetic clutch to be freely inserted and withdrawn thereto/therefrom from the machine body front side.

With the above-described arrangement, various transmission related devices and components can be inserted/withdrawn from the machine body front side, with bypassing the outer side of the entraining range of the transmission belt, which is a positon off the entraining range of the transmission belt in which the various transmission related devices and components are present in a crowded and complicated manner. So, attaching and detaching operations of the electric conduction harness relating to a maintenance work of the power transmission mechanism can be carried out smoothly and easily.

Other features and advantages thereof will become apparent upon reading the following explanation.

### BRIEF DESCRIPTON OF THE DRAWINGS

Fig. 1 is an overall side view of a riding type grass mower,
Fig. 2 is a front view showing a PTO (power take-off) mechanism, and
Fig. 3 is a cross-sectional view showing a portion of the PTO mechanism.

### DETAILED DESCRIPTION OF PREFERRED EMBODIMENTS

Next, embodiments of the present invention will be described with reference to the accompanying drawings.

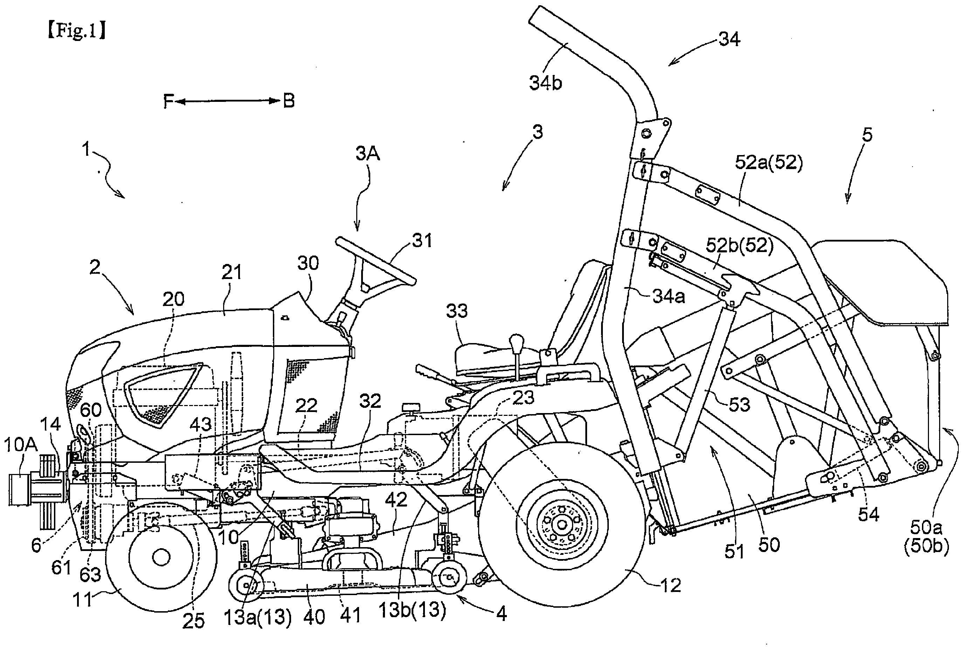

Incidentally, in the following discussion of this embodiment, a front-rear direction and a left-right direction are defined as follows, unless explicitly indicated otherwise. Namely, a forward traveling side of a traveling direction at the time of work traveling of a work machine to which the present invention is applied is defined as "front" (see arrow F in Fig. 1), and a reverse traveling side of a traveling direction is defined as "rear" (see arrow B in Fig. 1). And, relative to a front facing posture in this front-rear direction, the direction corresponding to the right side is defined as "right" and the direction corresponding to the left side is defined as "left", respectively.

### [General Arrangement of Riding Type Grass Mower]

Fig. 1 shows an overall side view of a riding type grass mower as one example of a "work machine". This riding type grass mower includes a pair of left and right steerable front wheels 11, 11 mounted on a front side of a machine body frame 10 of a traveling machine body 1 and a pair of drivable rear wheels 12, 12, mounted on a rear side of the same, so that the grass mower can be self-propelled.

Under the machine body frame 10, a rear discharge type mower device 4 is mounted in suspension to be lifted up/down between the front wheels 11 and the rear wheels 12 in the front-rear direction. On a rear side of this traveling machine body 1, there is provided a grass collecting device 5 for accommodating cut grass clippings which were cut (mowed) by the mower device 4.

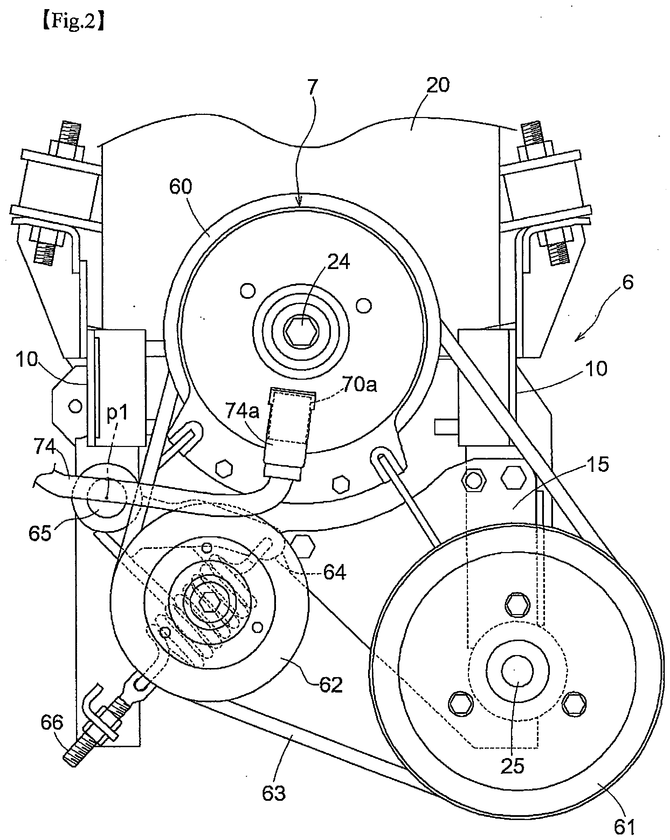

As shown in Figs. 1 and 2, on the machine body frame 10 of the traveling machine body 1, an engine section 2 is mounted at a front portion thereof and a riding driving section 3 is provided on a rear side of the engine section 2.

In the engine section 2, an engine 20 is housed in an engine hood 21 and mounted under this state on the machine body frame 10. Power taken off from the rear side of the engine 20 is inputted via a main transmission shaft 22 to a transmission case 23 disposed at a rear position and then power speed-changed within the transmission case 23 is outputted to e.g. a drive system for the rear wheels 12.

Power for utility work can be taken off from the front side of the engine 20. More particularly, on the front side of the engine 20, a PTO (power take-off) mechanism 6 constituted of a belt transmission mechanism is provided and via a PTO shaft 25 included in this PTO mechanism 6, power of the engine 20 is transmitted to the mower device 4.

In the riding driving section 3 rearwardly of the engine section 2, there are provided a maneuvering panel 30 continuous from a rear side of the engine hood 21, and a maneuvering section 3A having a steering wheel 31, etc. And, rearwardly of the maneuvering section 3A, a driver's seat 33 is provided on an upper side of an access step 32 disposed at the footing, and at a rear position of this driver' seat 33, a ROPS 34 is disposed vertically.

The ROPS 34 has a portal shape as seen in its front view; and to a pair of left and right ROPS bases (not shown) provided integrally at the rear end portion of the machine body frame 10, lower ends of column-like leg portions 34a, 34a on the left and right opposed sides are fixedly connected. Upper ends of the left and right column-like leg portions 34a, 34a are connected to each other via a portal-shaped upper frame 34b, thus covering the upper side of the driver's seat 33.

At a front portion of the machine body frame 10, there is provided a guard frame 10A acting as a protector member at a machine body front portion.

This guard frame 10A includes a balance weight attaching portion 14 to which a plurality of balance weights can be attached.

### [Mower Device]

The mower device 4 includes a housing 40 which is supported in suspension to be liftable up/down relative to the machine body frame 10, via a link mechanism 13 having a pair of front link 13a and rear link 13b on the left and right opposed sides thereof.

In the link mechanism 13, to an upper end of the front link 13a, a mower lift cylinder 43 is coupled. In association with expanding/contracting operations of this mower lift cylinder 43, a vertical positon of the housing 40 relative to the machine body frame 10 can be adjusted.

Inside the housing 40, there are disposed a pair of left and right rotary blades 41, 41. Each rotary blade 41 is rotatable about a vertical axis and rotational paths of the blades are partially overlapped with each other. As the rotary blades 41 are rotatably driven at constant speed under the above state, a cutting (mowing) of grass or plant is effected and also with a conveying air current generated in association with the rotation, cut grass clippings will be discharged via a discharge opening formed at a rear portion of the housing 40 to the rear side.

### [Grass Collecting Device]

As shown in Fig. 1 and Fig. 2, the grass collecting device 5 includes a grass collecting container 50 for housing the cut grass clippings and a lift drive mechanism 51 for operating this grass collecting container 50 for its lifting up/down operations relative to the traveling machine body and a cut grass discharging operation.

The grass collecting container 50 includes, at a front end side thereof, an receiving opening (not shown) for receiving cut grass clippings fed via a conveying duct 42 from the mower device 4 side and also includes, at a rear end side thereof, a discharge opening 50a for discharging and an opening/closing lid 50b covering this discharge opening 50a.

The lift drive mechanism 51 includes a lift link 52 for coupling the grass collecting container 50 to the ROPS 34 disposed on the rear side of the traveling machine body 1, a lift cylinder 53 (corresponding to a "hydraulic actuator") for lifting this lift link 52 up/down relative to the ROPS 34, and a dump cylinder 54 (corresponding to a "hydraulic actuator") for switching the posture of the grass collecting container 50 relative to the lift link 52 between a nearly horizontal collecting posture and a rearwardly tumbled and inclined discharging posture and opening and closing the opening/closing lid 50b of the grass collecting container 50.

The lift link 52 includes a pair of left and right upper links 52a and a pair of left and right lower links 52b, and front ends of the respective upper links 52a and the lower links 52b are detachably connected to upper portions of the ROPS 34 and rear ends of the same are connected to lower portions near the rear end of the grass collecting container 50. And, the upper end of the lift cylinder 53 constituted of a hydraulic cylinder is connected to the lower links 52b, so that in association with expanding/contracting operations of the lift cylinder 53, the lift link 52 is pivoted for lifting the grass collecting container 50 up/down.

The dump cylinder 54 constituted of a hydraulic cylinder is disposed downwardly of the rear end side of the grass collecting container 50. One end portion of the dump cylinder 54 is coupled to a well-known dump operation mechanism (not shown) to enable switching operations of the grass collecting container 50 between the nearly horizontal collecting posture and the rearwardly tumbled and inclined discharging posture in association with expanding/contracting operations of this dump cylinder 54.

The lift cylinder 53 and the dump cylinder 54 described above are provided in a pair on the left and right sides respectively, and are disposed in a hydraulic circuit to be operable simultaneously on the left and right sides.

### [PTO Mechanism]

The PTO mechanism 6 is configured as follows.

As shown in Fig. 1 and Fig. 2, the PTO mechanism 6 includes an output pulley 60 (corresponding to an "output shaft portion") fitted on a front output shaft 24 (corresponding to an "output shaft portion") extended forwardly from the front side of the engine 20, an input pulley 61 rotatable in unison with the PTO shaft 25 disposed at a lower position than the machine body frame 10, an idler 62, a transmission belt 63 which is entrained around the output pulley 60, the input pulley 61 and the idler 62, and an electromagnetic clutch 7 supporting a front end portion of the front output shaft 24.

The output pulley 60 is rotatably supported to the front output shaft 24 via a ball bearing 24a. The input pulley 61 is supported to a shaft end of the PTO shaft 25 supported via a bearing to a machine body fixing portion.

The idler 62 is supported to a support shaft 65, at an end portion of a pivot arm 64 pivotably attached to the machine body fixing portion. The pivot arm 64 is arranged to be pivotable to the right and left about a front-rear axis p1 and arranged also to be adjustable in its pivot angle position by means of an adjusting rod 66. When this pivot angle of the pivot arm 64 is changed, the position of the idler 62 is changed so that a tension state of the transmission belt 63 can be changed.

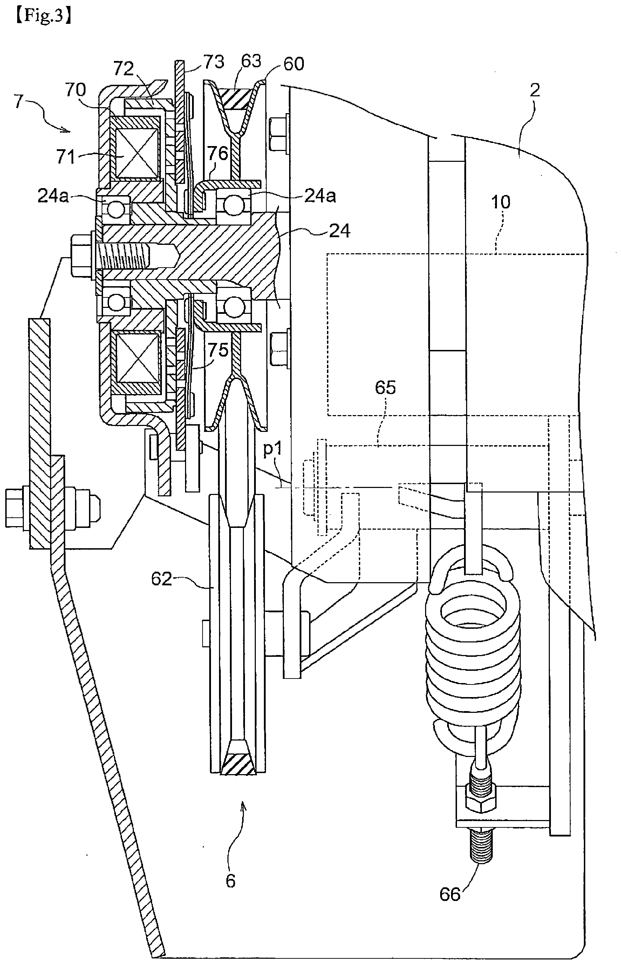

As shown in Fig. 3, the electromagnetic clutch 7 includes a field 70 acting also as an outer case, a coil 71 housed in the field 70, a rotor 72 rotatable in unison with the front output shaft 24 and an armature 73; and the armature 73 is coupled to the input pulley 61 so as to be able to transmit rotational power thereto.

The field 70 is non-rotatably supported by a fixing bracket 15 provided continuously from the machine body frame 10 side. Further, at a lower portion of the field 70, an input terminal 70a is provided. To this input terminal 70a, a connection terminal 74a of an electric conduction harness 74 is connected to be insertable thereto and withdrawable therefrom. This harness 74 is disposed to extend from a battery (not shown: corresponding to an "electric power supply section") on more machine body rear side than the transmission belt 63 and to bypass an outer side of entraining range of the transmission belt 63 so that its connection terminal 74a can be inserted to/withdrawn from the input terminal 70a from under on the machine body front side.

With the above-described arrangement, when the coil 71 is excited, the armature 73 is magnetically stuck to the rotor 72, to be rotatably driven with this rotor 72 in unison. Rotation of the armature 73 is transmitted via a plate spring 75 and a coupling member 76 to the input pulley 61 integral with this coupling member 76. With this, there is realized a clutch-engaged state in which power of the engine 20 is transmitted via the PTO mechanism 6 to the PTO shaft 25, so the mower device 4 is driven.

When the excitation of the coil 71 is released, the armature 73 is operated by the plate spring 75 to the side away from the rotor 72, thus, there is realized a clutch-disengaged state in which power transmission from the front output shaft 24 to the input pulley 61 is disconnected. In this, as the rotation of the input pulley 61 is stopped, the transmission belt 63 is not rotated either. Thus, progress of frictional wear which would occur in the case of the transmission belt 63 continuing its rotation constantly can be suppressed.

### [Other Embodiments]

(1) In the foregoing embodiment, there was disclosed an exemplary arrangement in which the electromagnetic clutch 7 is disposed on more machine body front side than the output pulley 60, relative to the front output shaft 24 protruding to the machine body front side from the engine 20. The invention is not limited thereto. For instance, it is possible to arrange such that the clutch 7 is disposed on more machine body rear side than the output pulley 60.

The rest of the arrangement may be identical to that of the foregoing embodiment.

(2) In the foregoing embodiment, there was disclosed an exemplary arrangement in which the output shaft portion is constituted of the combination of the front output shaft 24 protruding on the machine body front side from the engine 20 and the output pulley 60 fitted on the front output shaft 24. The invention is not limited thereto.

For instance, though not shown, it is possible to arrange such that the output pulley 60 is fitted on a rotational shaft different from the front output shaft 24 protruding on the machine body front side from the engine 20, and the front output shaft 24 and the rotational shaft are coupled to each other via some appropriate coupling means such as a gear coupling.

The rest of the arrangement may be identical to that of the foregoing embodiment.

(3) In the foregoing embodiment, there was disclosed an exemplary arrangement in which the transmission belt 63 of the PTO mechanism 6 is entrained around the three components, i.e. the output pulley 60, the input pulley 61 and the idler 62. The invention is not limited thereto. For instance, it is possible to employ any other appropriate arrangement e.g. in which the transmission belt 63 is entrained around the output pulley 60 and the input pulley 61 and a tension pulley is provided separately from the outer side of the entraining range of the transmission belt 63.

The rest of the arrangement may be identical to that of the foregoing embodiment.

(4) In the foregoing embodiment, there was disclosed an exemplary arrangement in which the electric conduction harness 74 is provided to bypass the outer side of the entraining range of the transmission belt 63. The invention is not limited thereto. For instance, it is possible to the harness 74 to be inserted to/withdrawn from the electromagnetic clutch 7 via the inner side of the entraining range of the transmission belt 63.

Further, although the electric conduction harness 74 per se has a certain degree of shape keeping property so as to be able to avoid interference with the transmission belt 63, for greater reliability, however, a certain reinforcing member which can readily keep its shape may be inserted into the harness 74, for facilitating its position retention.

The rest of the arrangement may be identical to that of the foregoing embodiment.

(5) In the foregoing embodiment, a riding type grass mower was disclosed as an example of a work machine. However, the present invention is not limited to such riding type grass mower, but can be applied also to various kinds such as a tractor, a transporting vehicle, etc. in which a PTO mechanism can be disposed at a machine (vehicle) body front portion.

## Claims

1. A work machine comprising:
a machine body frame (10);
an engine section (2) provided at a front portion of the machine body frame (10);
an engine (20) provided on a front end side of the engine section (2) and having an output shaft portion (60, 24) oriented to a machine body front side;
a transmission belt (63) entrained around the output shaft portion (60, 24) and an input portion of a PTO shaft (25); and
an electromagnetic clutch (7) provided in the output shaft portion (60, 24);
wherein the output shaft portion (60, 24) includes an output pulley (60) and the electromagnetic clutch (7) connects/disconnects power transmission to the output pulley (60) entrained by the transmission belt (63),
**characterized in that**
the electromagnetic clutch (7) provided in a shaft end portion of the output shaft portion (60, 24) which portion is disposed on more machine body front side than the transmission belt (63); and
an electric conduction harness (74) for the electromagnetic clutch (7) is disposed to extend from an electric power supply section on more machine body rear side than the transmission belt (63) and to bypass an outer side of entraining range of the transmission belt (63) to be connected to the electromagnetic clutch (7) to be freely inserted and withdrawn thereto/therefrom from the machine body front side.

## Patentansprüche

1. Arbeitsmaschine, umfassend:
einen Karosserierahmen (10) der Maschine,
einen Motorraum (2), der an einem vorderen Abschnitt des Karosserierahmens (10) der Maschine vorgesehen ist,
einen Motor (20), der an einer Stirnseite des Motorraums (2) vorgesehen ist und einen Abtriebswellenabschnitt (60, 24) aufweist, der zu einer Karosserievorderseite der Maschine hin ausgerichtet ist,
einen Treibriemen (63), der um den Abtriebswellenabschnitt (60, 24) und einen Eingangsabschnitt einer Zapfwelle (25) herum geführt ist, und
eine elektromagnetische Kupplung (7), die in dem Abtriebswellenabschnitt (60, 24) vorgesehen ist,
wobei der Abtriebswellenabschnitt (60, 24) eine Abtriebsscheibe (60) aufweist und die elektromagnetische Kupplung (7) die Kraftübertragung zu der Abtriebsscheibe (60), um die der Treibriemen (63) herumgeführt ist, verbindet/unterbricht,
**dadurch gekennzeichnet, dass**
die elektromagnetische Kupplung (7) in einem Wellenendabschnitt des Abtriebswellenabschnitts (60, 24) vorgesehen ist, der auf der Karosserievorderseite der Maschine weiter vorne angeordnet ist als der Treibriemen (63), und
ein Kabelbaum zur elektrischen Leitung (74) für die elektromagnetische Kupplung (7) so angeordnet ist, dass er sich von einem Bereich für elektrische Stromversorgung, der sich auf der Karosseriehinterseite der Maschine weiter hinten befindet als der Treibriemen (63), erstreckt und eine Außenseite des Führungsbereichs des Treibriemens (63) umgeht, um derart mit der elektromagnetischen Kupplung (7) verbunden zu sein, dass er von der Karosserievorderseite der Maschine aus frei in sie eingeführt und aus ihr herausgezogen werden kann.

## Revendications

1. Machine de travail comprenant :
un châssis de corps de machine (10) ;
une section de moteur (2) prévue sur une partie avant du châssis de corps de machine (10) ;
un moteur (20) prévu sur un côté d'extrémité avant de la section de moteur (2) et ayant une partie d'arbre de sortie (60, 24) orientée vers un côté avant du corps de machine ;
une courroie de transmission (63) entraînée autour de la partie d'arbre de sortie (60, 24) et une partie d'entrée d'un arbre de prise de force PTO (25) ; et
un embrayage électromagnétique (7) prévu dans la partie d'arbre de sortie (60, 24) ;
dans lequel la partie d'arbre de sortie (60, 24) comporte une poulie de sortie (60) et l'embrayage électromagnétique (7) connecte/déconnecte la transmission de puissance à la poulie de sortie (60) entraînée par la courroie de transmission (63),
**caractérisée en ce que**
l'embrayage électromagnétique (7) est prévu dans une partie d'extrémité d'arbre de la partie d'arbre de sortie (60, 24), laquelle partie est disposée plus du côté avant de corps de machine que la courroie de transmission (63) ; et
un harnais de conduction électrique (74) pour l'embrayage électromagnétique (7) est disposé de manière à s'étendre à partir d'une section d'alimentation électrique plus du côté arrière de corps de machine que la courroie de transmission (63), et à contourner un côté extérieur d'une plage d'entraînement de la courroie de transmission (63) pour être relié à l'embrayage électromagnétique (7) afin d'être librement inséré dans celui-ci et retiré de celui-ci, à partir du côté avant de corps de machine.
